# EUROPEAN PATENT SPECIFICATION

(11) **EP 3 782 835 B1**
(45) Date of publication and mention of the grant of the patent: **11.05.2022**
(21) Application number: 20189395.5
(22) Date of filing: 04.08.2020
(51) Int. Cl.: B60K 1/00, B60K 11/06, B60L 58/26, H01M 10/6563

(54) **VEHICLE BATTERY PACK**
FAHRZEUGBATTERIEPACK
BLOC-BATTERIE DE VÉHICULE

(30) Priority: 08.08.2019 JP 2019146738
(43) Date of publication of application: 24.02.2021
(73) Proprietor: Suzuki Motor Corporation, Shizuoka 432-8611 (JP)
(72) Inventor: HARADA, Yu, Shizuoka, 432-8611 (JP)
(74) Representative: Haseltine Lake Kempner LLP

(56) References cited:
- EP-A1- 2 712 005
- EP-A1- 3 096 390
- JP-A- 2002 313 440
- JP-A- 2015 065 056
- JP-A- 2015 201 446

## Description

### VEHICLE BATTERY PACK

### Technical Field

The present invention relates to a vehicle battery pack.

### Background Art

In a vehicle such as an automobile, a battery may be housed in a luggage compartment at the rear of the vehicle. As related art of this type, a technique disclosed in Patent Literature 1 is known. According to Patent Literature 1, in a power unit disposed below a floor on a rear side of a seat, by disposing a battery module at a lower portion, and by disposing a DC/DC converter and an inverter for driving a motor in parallel in a vehicle width direction at an upper portion of the battery module, cooling air at a low temperature before heat exchange is applied to all of the battery module, the DC/DC converter, and the inverter for driving the motor, thereby enhancing a cooling effect.

Another vehicle battery pack comprising a battery case in which a battery module is built, an electrical component configured to convert electric power from the battery module, a duct through which an air for cooling flows, a cooling fan configured to circulate the air to the duct, and a housing which houses the battery case, the electrical component and the duct is also known from EP2712005A1.

### Citation List

### Patent Literature

Patent Literature 1: JP-A-2008-62780

### Summary of Invention

### Technical Problem

However, in the related technique described in Patent Literature 1, since the battery module and the inverter are arranged in a manner overlapping with each other in an upper-lower direction, there is a problem that a space of the luggage compartment above the battery pack is limited.

The present invention has been made in view of the above circumstances, and an object thereof is to provide a vehicle battery pack that can reduce a size of a housing and improve cooling performance of a battery module and an electrical component.

### Solution to Problem

There is provided a vehicle battery pack including: a battery case in which a battery module is built; an electrical component configured to convert electric power from the battery module; a duct through which an air for cooling flows; a cooling fan configured to circulate the air to the duct; and a housing which houses the battery case, the electrical component, and the duct. The battery case includes: a first vertical wall extending in a first direction; a second vertical wall extending in a second direction orthogonal to the first vertical wall; and a corner portion where the first vertical wall and the second vertical wall intersect. The electrical component is disposed on a lateral side of the battery case in a manner facing the first vertical wall in the second direction. The duct includes: an upstream duct connected to the cooling fan; and a downstream duct that communicates with a discharge port formed on the upstream duct and that is configured to guide the air, which is guided from the upstream duct through the discharge port, to the battery case and the electrical component. The downstream duct includes: a first downstream duct portion that extends from the corner portion along the first vertical wall, the first downstream duct portion having a downstream end that communicates with the electrical component; a second downstream duct portion that extends from the corner portion along the second vertical wall, the second downstream duct portion having a downstream end that communicates with the battery case; and a downstream duct corner portion connected to the first downstream duct portion and the second downstream duct portion on a lateral side of the corner portion. And the discharge port is disposed across one of the first downstream duct portion and the second downstream duct portion, and across the downstream duct corner portion.

### Brief Description of Drawings

[Fig. 1] Fig. 1 is a plan view of a vehicle battery pack according to an embodiment of the present invention.
[Fig. 2] Fig. 2 is a rear view of the vehicle battery pack according to the embodiment of the present invention.
[Fig. 3] Fig. 3 is a cross-sectional view taken along a line III-III in Fig. 1.
[Fig. 4] Fig. 4 is a cross-sectional view taken along a line IV-IV in Fig. 1.
[Fig. 5] Fig. 5 is a plan view of a state in which an upper housing of the vehicle battery pack according to the embodiment of the present invention is removed.
[Fig. 6] Fig. 6 is a cross-sectional view taken along a line VI-VI in Fig. 2.
[Fig. 7] Fig. 7 is a perspective view of the vehicle battery pack according to the embodiment of the present invention.

### Description of Embodiments

According to one advantageous aspect of the present invention, there is provided a vehicle battery pack including: a battery case in which a battery module is built; an electrical component configured to convert electric power from the battery module; a duct through which an air for cooling flows; a cooling fan configured to circulate the air to the duct; and a housing which houses the battery case, the electrical component, and the duct. The battery case includes: a first vertical wall extending in a first direction; a second vertical wall extending in a second direction orthogonal to the first vertical wall; and a corner portion where the first vertical wall and the second vertical wall intersect. The electrical component is disposed on a lateral side of the battery case in a manner facing the first vertical wall in the second direction. The duct includes: an upstream duct connected to the cooling fan; and a downstream duct that communicates with a discharge port formed on the upstream duct and that is configured to guide the air, which is guided from the upstream duct through the discharge port, to the battery case and the electrical component. The downstream duct includes: a first downstream duct portion that extends from the corner portion along the first vertical wall, the first downstream duct portion having a downstream end that communicates with the electrical component; a second downstream duct portion that extends from the corner portion along the second vertical wall, the second downstream duct portion having a downstream end that communicates with the battery case; and a downstream duct corner portion connected to the first downstream duct portion and the second downstream duct portion on a lateral side of the corner portion. And the discharge port is disposed across one of the first downstream duct portion and the second downstream duct portion, and across the downstream duct corner portion. Thus, in the vehicle battery pack according to one advantageous aspect of the present invention, the size of the housing can be reduced and the cooling performance of the battery module and the electrical component can be improved.

### [Embodiment]

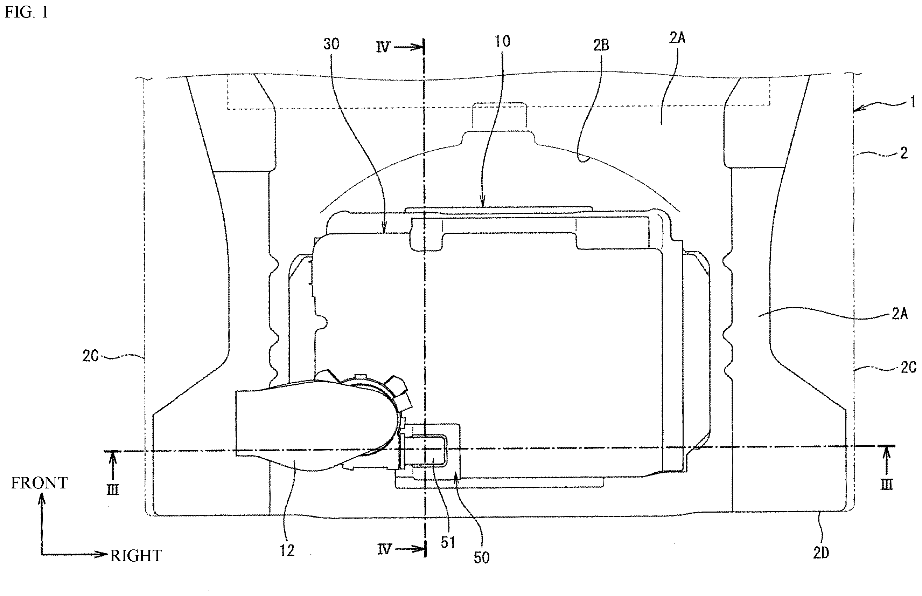

Hereinafter, a vehicle battery pack according to an embodiment of the present invention will be described with reference to the drawings. In Figs. 1 to 7, upper, lower, front, rear, left, and right directions are upper, lower, front, rear, left, and right directions of the vehicle battery pack installed in the vehicle, a direction orthogonal to a front-rear direction of the vehicle is a leftright direction, and a height direction of the vehicle battery pack is a upper-lower direction.

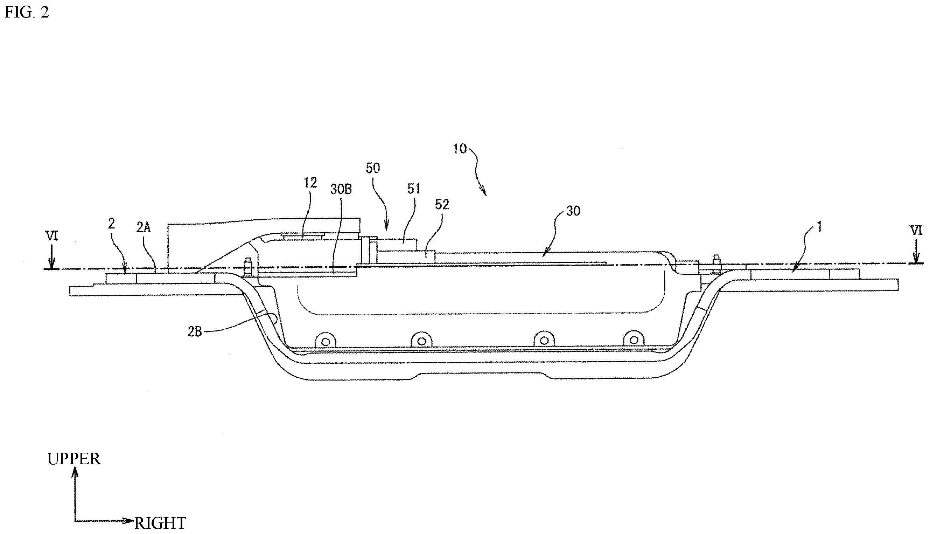

Figs. 1 to 7 are figures showing the vehicle battery pack according to the embodiment of the present invention. In Figs. 1 and 2, a vehicle battery pack 10 is housed in a recess portion 2B formed on a rear floor panel 2A at a rear portion of a vehicle body 2 of a vehicle 1. The rear floor panel 2A forms a luggage compartment by a side panel 2C constituting a side surface of the vehicle body 2 and a rear panel 2D constituting a rear surface of the vehicle body, and the like.

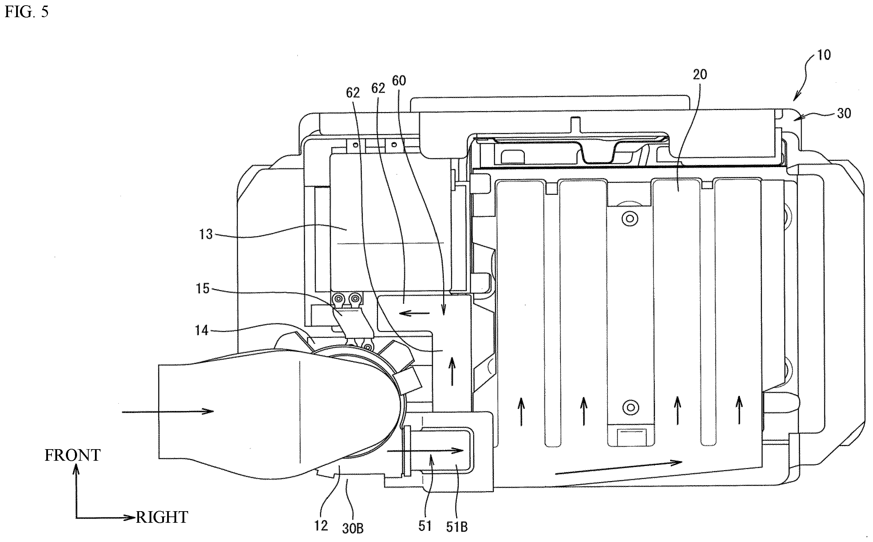

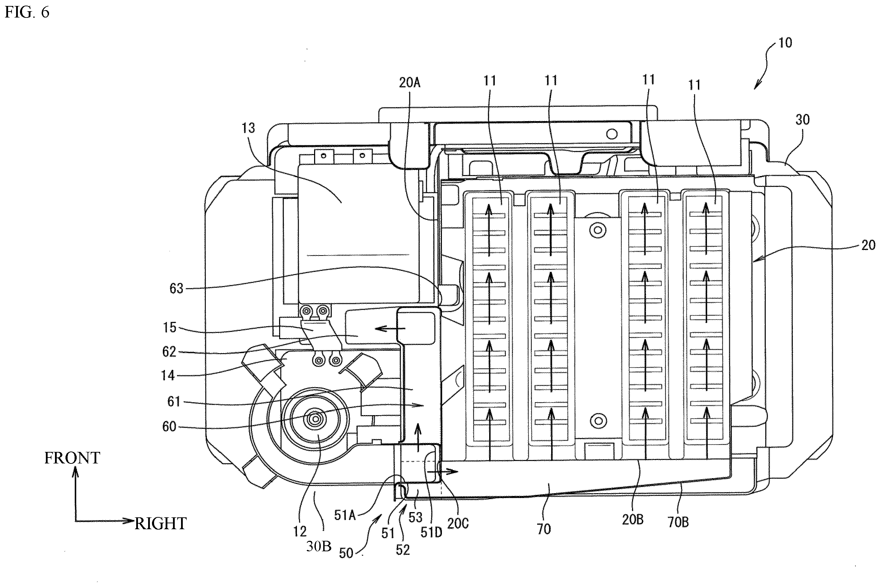

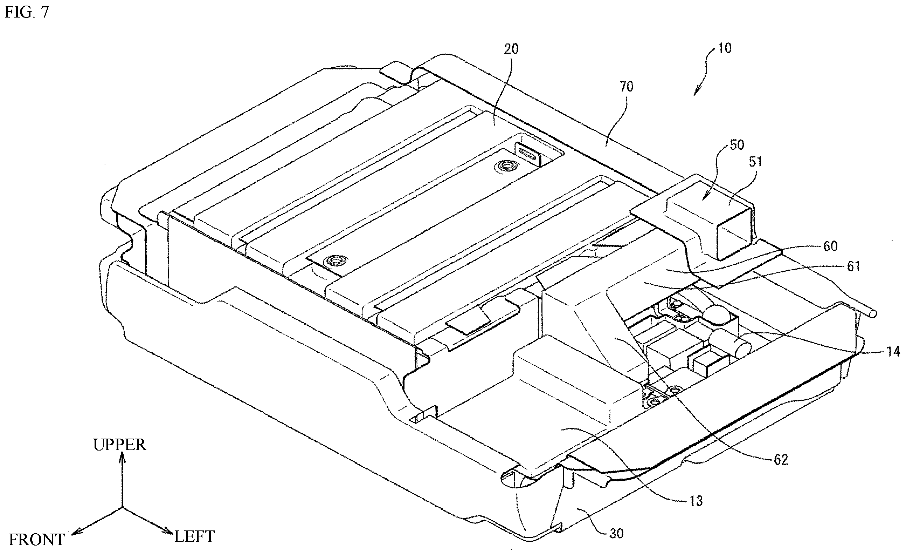

In Figs. 5 and 7, the vehicle battery pack 10 includes a battery case 20 in which battery modules 11 (see Fig. 6) are built. Four battery modules 11 are housed in the battery case 20, and each battery module 11 is formed of an assembled battery in which a plurality of cells are electrically connected. The battery modules 11 are arranged side by side in a vehicle width direction. Thus, an arrangement direction of the battery modules 11 coincides with the vehicle width direction.

The vehicle battery pack 10 includes an inverter 13 as an electrical component that converts electric power from the battery modules 11, a switching portion 14 that electrically connects the battery modules 11 and the inverter 13, and a cooling fan 12 (see Fig. 6). Further, the vehicle battery pack 10 includes a duct 50 connected to the cooling fan 12.

In Figs. 1 and 2, the vehicle battery pack 10 includes a housing 30. The battery case 20, the inverter 13, the switching portion 14, and the duct 50 are housed in the housing 30.

In Figs. 5 and 7, the battery case 20 is disposed in a region on a right side from a center portion in the vehicle width direction of the housing 30. A space in which the inverter 13 and the switching portion 14 are arranged is formed in a region on a left side of the battery case 20 in the housing 30, that is, in a region on a lateral side of the battery case 20 in the vehicle width direction. The inverter 13 is disposed on a front side of the switching portion 14. The inverter 13 and the switching portion 14 are electrically connected to each other via a bus bar 15.

The cooling fan 12 is disposed on an upper surface of a left rear end portion of the housing 30, and supplies air taken in from outside the housing 30 to the duct 50.

In Fig. 6, the battery case 20 includes a first vertical wall 20A extending in a vehicle front-rear direction as a first direction, a second vertical wall 20B extending in the vehicle width direction as a second direction orthogonal to the first vertical wall 20A, and a corner portion 20C where the first vertical wall 20A and the second vertical wall 20B intersect. In the present embodiment, the corner portion 20C is disposed at a rear end portion of the first vertical wall 20A extending in the vehicle front-rear direction. Here, the first direction in which the first vertical wall 20A extends may be the vehicle width direction instead of the vehicle front-rear direction. Further, the second direction in which the second vertical wall 20B extends may be the vehicle front-rear direction instead of the vehicle width direction. That is, the first direction and the second direction may be any one and another directions orthogonal to each other in a horizontal plane.

The inverter 13 is disposed on a lateral side of the battery case 20 in a manner facing the first vertical wall 20A in the vehicle width direction.

The duct 50 includes an upstream duct 51 connected to the cooling fan 12, and a downstream duct 52 that communicates with a discharge port 51A formed on the upstream duct 51 and that guides the air, which is guided from the upstream duct 51 through the discharge port 51A, to the battery case 20 and the inverter 13. An electrical component cooling duct 60 constitutes a first downstream duct portion in the present invention, and a battery cooling duct 70 constitutes a second downstream duct portion in the present invention.

The downstream duct 52 includes the electrical component cooling duct 60 that extends from the corner portion 20C along the first vertical wall 20A and that has a downstream end communicating with the inverter 13, the battery cooling duct 70 that extends from the corner portion 20C along the second vertical wall 20B and that has a downstream end communicating with the battery case 20, and a branch duct 53 connected to the electrical component cooling duct 60 and the battery cooling duct 70 at a lateral side of the corner portion 20C. Here, the branch duct 53 is a portion where the electrical component cooling duct 60 and the battery cooling duct 70 intersect at a right angle. Boundaries between the two ducts and the branch duct 53 is indicated by a broken line.

The discharge port 51A is disposed across one of the electrical component cooling duct 60 and the battery cooling duct 70, and across the branch duct 53. In the present embodiment, the discharge port 51A is disposed across the electrical component cooling duct 60 and the branch duct 53.

The inverter 13 is disposed in a manner facing, in the vehicle width direction, an end portion (a front end portion) of the first vertical wall 20A opposite to an end portion (a rear end portion) on the corner portion 20C side. In the present embodiment, the rear end portion of the first vertical wall 20A is the end portion on the corner portion 20C side, that is, the end portion on the side close to the corner portion 20C, and the front end portion of the first vertical wall 20A is the end portion on the side far from the corner portion 20C. A recess portion 30B that is recessed below an upper surface of the electrical component cooling duct 60 or the battery cooling duct 70, is formed on the upper surface of the housing 30. The recess portion 30B is disposed in a region facing the electrical component cooling duct 60 in the vehicle width direction and facing the inverter 13 in the front-rear direction. The cooling fan 12 and the upstream duct 51 are disposed in the recess portion 30B.

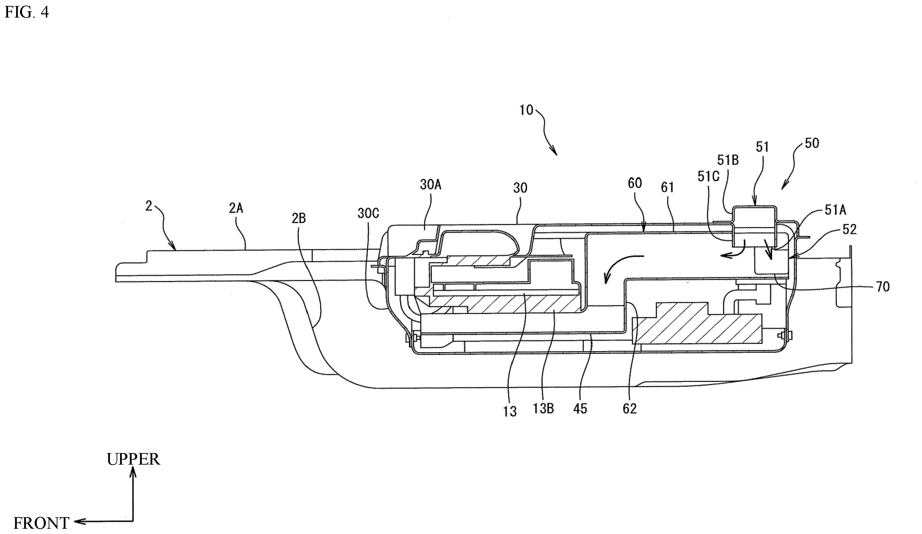

In Fig. 4, the upstream duct 51 includes an upper duct portion 51B that is connected to the cooling fan 12 and that protrudes upward from the upper surface of the housing 30, and a lower duct portion 51C that is connected to a lower side of the upper duct portion 51B and that is disposed inside the housing 30. A discharge port 51A is formed at a lower end of the lower duct portion 51C. The lower duct portion 51C is connected to the downstream duct 52 such that the lower end of the lower duct portion 51C is inserted inside the downstream duct 52, and the discharge port 51A opens downward at the lower end of the lower duct portion 51C. The housing 30 includes an upper housing 30A and a lower housing 30C. The upper housing 30A constitutes the upper surface of the housing 30, and the lower housing 30C constitutes a side surface and a lower surface of the housing 30.

As shown in Fig. 6, in a plan view of the housing 30, the discharge port 51A is disposed in a manner overlapping with a boundary (indicated by a broken line) between the branch duct 53 and one of the electrical component cooling duct 60 and the battery cooling duct 70. In the present embodiment, the discharge port 51A is disposed in a manner overlapping with the boundary between the branch duct 53 and the electrical component cooling duct 60. A wall surface 51D facing the cooling fan 12 is provided inside the upstream duct 51. The inverter 13 is disposed at the downstream end of the electrical component cooling duct 60. The electrical component cooling duct 60 includes a front-rear direction extending duct 61 extending in the vehicle front-rear direction, and an inclined duct portion 62 extending in the vehicle width direction between the inverter 13 and the switching portion 14. The inclined duct portion 62 is inclined so as to lower the air downward.

In Fig. 4, a heat dissipation member 13B that dissipates heat is provided on a lower surface of the inverter 13. A bracket 45 connected to the downstream end of the electrical component cooling duct 60 is provided below the heat dissipation member 13B. The bracket 45 is formed in a shape that takes in a side surface and a lower surface of the heat dissipation member 13B, and supplies the air introduced from the electrical component cooling duct 60 to the heat dissipation member 13B.

In Fig. 6, the electrical component cooling duct 60 includes a bent portion 63 that is bent so as to change a flow direction of the air from the vehicle front-rear direction to the vehicle width direction. In other words, in the bent portion 63, the front-rear direction extending duct 61 and the inclined duct portion 62 are connected at a right angle. The bent portion 63 is adjacent to the inverter 13 in the vehicle front-rear direction.

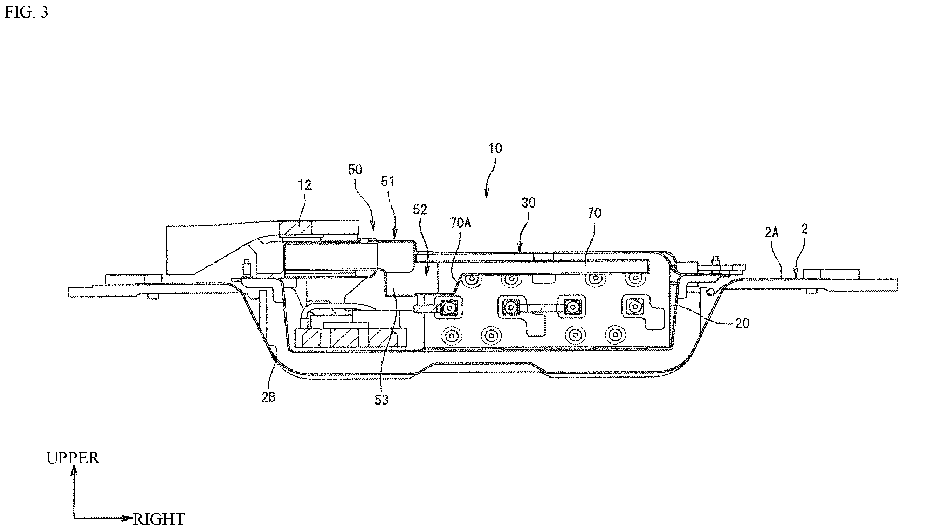

In Fig. 3, a first inclined surface 70A inclined upward toward the flow direction of the air is provided on a lower surface of the battery cooling duct 70. In Fig. 6, a second inclined surface 70B facing the battery case 20 in the vehicle front-rear direction is provided on a side surface of the battery cooling duct 70. The downstream end of the battery cooling duct 70 introduces air to an upper surface on an inner side of the battery case 20.

As described above, in the present embodiment, the battery case 20 includes the first vertical wall 20A extending in the vehicle front-rear direction, the second vertical wall 20B extending in the vehicle width direction orthogonal to the first vertical wall 20A, and the corner portion 20C where the first vertical wall 20A and the second vertical wall 20B intersect, and the inverter 13 is disposed on the lateral side of the battery case 20 in a manner facing the first vertical wall 20A in the vehicle width direction.

The duct 50 includes the upstream duct 51 connected to the cooling fan 12, and the downstream duct 52 that communicates with a discharge port 51A formed on the upstream duct 51 and that guides the air, which is guided from the upstream duct 51 through the discharge port 51A, to the battery case 20 and the inverter 13.

The downstream duct 52 includes the electrical component cooling duct 60 that extends from the corner portion 20C along the first vertical wall 20A and that has the downstream end communicating with the inverter 13, the battery cooling duct 70 that extends from the corner portion 20C along the second vertical wall 20B and that has the downstream end communicating with the battery case 20, and the branch duct 53 connected to the electrical component cooling duct 60 and the battery cooling duct 70 at the lateral side of the corner portion 20C. The discharge port 51A is disposed across one of the electrical component cooling duct 60 and the battery cooling duct 70, and across the branch duct 53.

As described above, since the electrical component cooling duct 60 and the battery cooling duct 70 are arranged along the first vertical wall 20A and the second vertical wall 20B from the corner portion 20C of the battery case 20, a contact area between the first vertical wall 20A of the battery case 20 and the electrical component cooling duct 60, and a contact area between the second vertical wall 20B of the battery case 20 and the battery cooling duct 70, can be increased, and the electrical component cooling duct 60 and the battery cooling duct 70 can be stably held in the housing 30.

Further, since stability of position of the electrical component cooling duct 60 and the battery cooling duct 70 is improved, the downstream duct 52 can be prevented from swinging greatly due to vibration of the vehicle or the like, unevenness of air flow that flows in the downstream duct 52 can be prevented securely, and more air can smoothly flow into the inverter 13 and the battery case 20, so that the cooling performance of the inverter 13 and the battery case 20 can be enhanced.

Further, since the downstream duct 52 disposed in the housing 30 having limited internal space, is branched in two directions from the corner portion 20C of the battery case 20 and is disposed along side walls of the battery case 20, the electrical component cooling duct 60 and the battery cooling duct 70 can be arranged without overlapping with each other in the upper-lower direction. Further, since the electrical component cooling duct 60 and the battery cooling duct 70 can be arranged without being greatly separated from the battery case 20, the downstream duct 52 for guiding the air to the battery case 20 and the inverter 13 can be arranged in a narrow space. Therefore, another space for arranging the other components and the inverter 13 can be provided around the downstream duct 52, and useless dead space that is not used is not generated, so that the size of the battery pack can be reduced.

Furthermore, the inverter 13 and the battery case 20 can be arranged side by side in the vehicle width direction, and thus can be prevented from being mutually affected by heat generation, and the cooling performance of the inverter 13 and the battery modules 11 can be enhanced. Therefore, output performance of the battery module 11 can be enhanced, while a space occupancy rate of the vehicle battery pack 10 in the luggage compartment can be reduced and the luggage compartment can be secured sufficiently. Such effect can be achieved as well when the inverter 13 and the battery case 20 are arranged side by side in the vehicle front-rear direction. Therefore, the inverter 13 and the battery case 20 may be arranged side by side in the vehicle front-rear direction.

Further, since the discharge port 51A is disposed on the downstream duct 52 across one of the electrical component cooling duct 60 and the battery cooling duct 70 and across the branch duct 53 in a plan view or a side view of the housing 30, the air discharged from the upstream duct 51 can be supplied to the electrical component cooling duct 60 and the battery cooling duct 70 without bias through the branch duct 53 even if only one discharge port 51A is provided. In addition, it is possible to improve both the cooling performance of the battery module 11 and the cooling performance of the inverter 13 with a simple structure.

As a result, the size of the housing 30 can be reduced, and the cooling performance of the battery module 11 and the inverter 13 can be improved.

In the present embodiment, the inverter 13 is disposed in a manner facing, in the vehicle width direction, the end portion of the first vertical wall 20A opposite to the end portion on the corner portion 20C side; the recess portion 30B that is recessed below the upper surface of the electrical component cooling duct 60 or the battery cooling duct 70, is formed on the upper surface of the housing 30; the recess portion 30B is disposed in the region facing the electrical component cooling duct 60 in the vehicle width direction and facing the inverter 13 in the front-rear direction; and the cooling fan 12 and the upstream duct 51 are disposed in the recess portion 30B.

Thereby, the inverter 13 can be disposed away from the branch duct 53, and a space can be provided on the rear side of the inverter 13 in the housing 30 and on the lateral side of the battery case 20. In other words, a space can be provided in a left rear end portion in the housing 30.

Therefore, by recessing the upper surface of the housing 30 corresponding to the space in the left rear end portion in the housing 30 downward, the recess portion 30B can be formed on the upper surface of the housing 30 without interfering with the inverter 13 and the battery case 20, and the cooling fan 12 and the upstream duct 51 can be disposed in the recess portion 30B.

As a result, the cooling fan 12 and the upstream duct 51 can be prevented from greatly protruding upward from the upper surface of the housing 30, and the size of the vehicle battery pack 10 can be reduced, thereby enlarging the luggage compartment.

In the present embodiment, the upstream duct 51 includes the upper duct portion 51B that is connected to the cooling fan 12 and that protrudes upward from the upper surface of the housing 30, and the lower duct portion 51C that is connected to the lower side of the upper duct portion 51B and that is disposed inside the housing 30; and the discharge port 51A is formed at the lower end of the lower duct portion 51C. The lower duct portion 51C is connected to the downstream duct 52 such that the lower end of the lower duct portion 51C is inserted into the downstream duct 52, and the discharge port 51A opens downward at the lower end of the lower duct portion 51C.

As a result, since the lower end of the lower duct portion 51C is inserted into the downstream duct 52, a protrusion amount of the upstream duct 51 from the housing 30 can be suppressed, the size of the vehicle battery pack 10 can be reduced, and the space of the luggage compartment can be secured sufficiently.

Further, since the discharge port 51A is opened downward in a state in which the lower duct portion 51C of the upstream duct 51 is inserted into the downstream duct 52, the air introduced into the upstream duct 51 from the cooling fan 12 collides with a vertical wall on the downstream end portion of the upstream duct 51, then is oriented toward the discharge port 51A below, and is discharged from the discharge port 51A to the inside of the downstream duct 52.

Therefore, after a flow velocity of the air is reduced at the downstream end portion inside the upstream duct 51, the air can be guided from the discharge port 51A to the downstream duct 52 at a reduced flow velocity.

As a result, the air can be prevented from being biased greatly and flowing into one of the electrical component cooling duct 60 and the battery cooling duct 70, and both the inverter 13 and the battery module 11 can be reliably cooled with good balance.

In the present embodiment, in a plan view of the housing 30, the discharge port 51A is disposed in a manner overlapping with the boundary between the branch duct 53 and one of the electrical component cooling duct 60 and the battery cooling duct 70.

As a result, the air can be prevented from being biased and flowing from the discharge port 51A into one of the electrical component cooling duct 60 and the battery cooling duct 70, and both the inverter 13 and the battery module 11 can be reliably cooled with good balance. Further, by changing an overlap amount of the discharge port 51A with respect to the boundary between the branch duct 53 and the electrical component cooling duct 60, or an overlap amount of the discharge port 51A with respect to the boundary between the branch duct 53 and the battery cooling duct 70, distribution of the air respectively flowing into the electrical component cooling duct 60 and the battery cooling duct 70 from the discharge port 51A can be changed.

In the present embodiment, the wall surface 51D facing the cooling fan 12 is provided inside the upstream duct 51, the inverter 13 is disposed at the downstream end of the electrical component cooling duct 60, and the heat dissipation member 13B that dissipates heat is provided on the lower surface of the inverter 13.

As a result, the air taken in from the cooling fan 12 collides with the wall surface 51D inside the upstream duct 51, so that air is likely to be distributed to the electrical component cooling duct 60 side, and the air can be supplied to the heat dissipation member 13B on the lower surface of the inverter 13 disposed at the downstream end of the electrical component cooling duct 60, so as to cool the inverter 13.

In the present embodiment, the bracket 45 connected to the downstream end of the electrical component cooling duct 60 is provided below the heat dissipation member 13B; the electrical component cooling duct 60 includes the inclined duct portion 62 inclined so as to lower the air downward; and the bracket 45 is formed in a shape that takes in the side surface and the lower surface of the heat dissipation member 13B, and supplies the air introduced from the electrical component cooling duct 60 to the heat dissipation member 13B.

As a result, while the air is being guided to the heat dissipation member 13B on the lower surface on the inverter 13 by the electrical component cooling duct 60, the air can be smoothly lowered downward by the inclined duct portion 62 and can be supplied to the entire heat dissipation member 13B by the bracket 45 without bias, so that the cooling efficiency of the inverter 13 can be enhanced.

In the present embodiment, the electrical component cooling duct 60 includes the bent portion 63 that is bent so as to change the flow direction of the air from the vehicle front-rear direction to the vehicle width direction, and the bent portion 63 is adjacent to the inverter 13 in the vehicle front-rear direction.

Thus, the air can be supplied to a side end in the vehicle width direction of the heat dissipation member 13B, and the cooling efficiency of the inverter 13 can be enhanced.

In the present embodiment, the first inclined surface 70A inclined upward toward the flow direction of the air is provided on the lower surface of the battery cooling duct 70; the second inclined surface 70B facing the battery case 20 in the vehicle front-rear direction is provided on the side surface of the battery cooling duct 70; and the downstream end of the battery cooling duct 70 introduces air to the upper surface on the inner side of the battery case 20.

As a result, the air supplied from the cooling fan 12 to the battery cooling duct 70 becomes an air flow upward from below due to the first inclined surface 70A, and becomes an air flow toward the battery case 20 side due to the second inclined surface 70B. Therefore, the air can be blown toward the upper surface on the inner side of the battery case 20 in a state where the air is collected and the flow velocity is accelerated, and the cooling efficiency of the battery module 11 in the battery case 20 can be enhanced.

Although the embodiment of the present invention has been disclosed, it will be apparent to those skilled in the art that modifications may be made without departing from the scope of the present invention.

### Reference Signs List

1: Vehicle
10: Vehicle battery pack
11: Battery module
12: Cooling fan
13: Inverter (Electrical component)
20: Battery case
20A: First vertical wall
20B: Second vertical wall
20C: Corner portion
30: Housing
30B: Recess portion
45: Bracket
50: Duct
51: Upstream duct
51A: Discharge port
51B: Upper duct portion
51C: Lower duct portion
51D: Wall surface
52: Downstream duct
53: Branch duct
60: Electrical component cooling duct (First downstream duct portion)
62: Inclined duct portion
63: Bent portion
70: Battery cooling duct (Second downstream duct portion)
70A: First inclined surface
70B: Second inclined surface

## Claims

1. A vehicle battery pack (10) comprising:
a battery case (20) in which a battery module (11) is built;
an electrical component (13) configured to convert electric power from the battery module (11);
a duct (50) through which an air for cooling flows;
a cooling fan (12) configured to circulate the air to the duct (50); and
a housing (30) which houses the battery case (20), the electrical component (13), and the duct (50),
wherein the battery case (20) includes:
a first vertical wall (20A) extending in a first direction;
a second vertical wall (20B) extending in a second direction orthogonal to the first vertical wall (20A); and
a corner portion (20C) where the first vertical wall (20A) and the second vertical wall (20B) intersect,
wherein the electrical component (13) is disposed on a lateral side of the battery case (20) in a manner facing the first vertical wall (20A) in the second direction,
wherein the duct (50) includes:
an upstream duct (51) connected to the cooling fan (12); and
a downstream duct (52) that communicates with a discharge port (51A) formed on the upstream duct (51) and that is configured to guide the air, which is guided from the upstream duct (51) through the discharge port (51A), to the battery case (20) and the electrical component (13),
**characterized in that** the downstream duct (52) includes:
a first downstream duct portion (60) that extends from the corner portion (20C) along the first vertical wall (20A), the first downstream duct portion (60) having a downstream end that communicates with the electrical component (13);
a second downstream duct portion (70) that extends from the corner portion (20C) along the second vertical wall (20B), the second downstream duct portion (70) having a downstream end that communicates with the battery case (20); and
a downstream duct corner portion connected to the first downstream duct portion (60) and the second downstream duct portion (70) on a lateral side of the corner portion (20C), and
wherein the discharge port (51A) is disposed across one of the first downstream duct portion (60) and the second downstream duct portion (70), and across the downstream duct corner portion.

2. The vehicle battery pack (10) according to claim 1,
wherein the electrical component (13) is disposed in a manner facing, in the second direction, an end portion of the first vertical wall (20A) opposite to an end portion on the corner portion (20C) side,
wherein a recess portion (30B) that is recessed below an upper surface of the first downstream duct portion (60) or the second downstream duct portion (70), is formed on an upper surface of the housing (30),
wherein the recess portion (30B) is disposed in a region facing the first downstream duct portion (60) in the second direction and facing the electrical component (13) in the first direction, and
wherein the cooling fan (12) and the upstream duct (51) are disposed in the recess portion (30B).

3. The vehicle battery pack (10) according to claim 1 or 2,
wherein the upstream duct (51) includes:
an upper duct portion (51B) that is connected to the cooling fan (12) and that protrudes upward from the upper surface of the housing (30); and
a lower duct portion (51C) that is connected to a lower side of the upper duct portion (51B) and that is disposed inside the housing (30),
wherein the discharge port (51A) is formed at a lower end of the lower duct portion (51C),
wherein the lower duct portion (51C) is connected to the downstream duct (52) such that the lower end of the lower duct portion (51C) is inserted into the downstream duct (52), and
wherein the discharge port (51A) is opened downward at the lower end of the lower duct portion (51C).

4. The vehicle battery pack (10) according to any one of claims 1 to 3,
wherein in a plan view of the housing (30), the discharge port (51A) is disposed in a manner overlapping with a boundary between the downstream duct corner portion and one of the first downstream duct portion (60) and the second downstream duct portion (70).

5. The vehicle battery pack (10) according to any one of claims 1 to 4,
wherein a wall surface (5 ID) facing the cooling fan (12) is provided inside the upstream duct (51),
wherein the electrical component (13) is disposed at the downstream end of the first downstream duct portion (60), and
wherein a heat dissipation member configured to dissipate heat is provided on a lower surface of the electrical component (13).

6. The vehicle battery pack (10) according to claim 5, further comprising:
a bracket (45) connected to the downstream end of the first downstream duct portion (60) below the heat dissipation member,
wherein the first downstream duct portion (60) includes an inclined duct portion (62) inclined so as to lower the air downward, and
wherein the bracket (45) is formed in a shape that takes in a side surface and a lower surface of the heat dissipation member, and is configured to supply the air introduced from the first downstream duct portion (60) to the heat dissipation member.

7. The vehicle battery pack (10) according to any one of claims 1 to 6,
wherein the first downstream duct portion (60) includes a bent portion (63) that is bent so as to change a flow direction of the air from the first direction to the second direction, and
wherein the bent portion (63) is adjacent to the electrical component (13) in the first direction.

8. The vehicle battery pack (10) according to any one of claims 1 to 7,
wherein a first inclined surface (70A) inclined upward toward a flow direction of the air is provided on a lower surface of the second downstream duct portion (70),
wherein a second inclined surface (70B) facing the battery case (20) in the first direction is provided on a side surface of the second downstream duct portion (70), and
wherein the downstream end of the second downstream duct portion (70) is configured to introduce the air to an upper surface on an inner side of the battery case (20).

## Patentansprüche

1. Fahrzeugbatteriepack (10), das umfasst:
ein Batteriefach (20), in dem ein Batteriemodul (11) gebaut ist;
ein elektrisches Bauteil (13), das dazu konfiguriert ist, elektrische Leistung aus dem Batteriemodul (11) umzuwandeln;
ein Rohr (50), durch das eine Luft zum Kühlen fließt;
ein Kühlgebläse (12), das dazu konfiguriert ist, die Luft zu dem Rohr (50) umzuwälzen; und
ein Gehäuse (30), das das Batteriegehäuse (20), das elektrische Bauteil (13) und das Rohr (50) unterbringt,
wobei das Batteriegehäuse (20) beinhaltet:
eine erste vertikale Wand (20A), die sich in einer ersten Richtung erstreckt;
eine zweite vertikale Wand (20B), die sich in einer zweiten Richtung orthogonal zu der ersten vertikalen Wand (20A) erstreckt; und
und einen Eckabschnitt (20C), wo die erste vertikale Wand (20A) und die zweite vertikale Wand (20B) einander schneiden,
wobei das elektrische Bauteil (13) auf einer seitlichen Seite des Batteriegehäuses (20) auf eine Weise angeordnet ist, die der vertikalen Wand (20A) in der zweiten Richtung zugewandt ist,
wobei das Rohr (50) beinhaltet:
ein stromaufwärtiges Rohr (51), das mit dem Kühlgebläse (12) verbunden ist; und
ein stromabwärtiges Rohr (52), das mit einer Auslassöffnung (51A), die auf dem stromaufwärtigen Rohr (51) gebildet ist, in Kommunikation steht und das dazu konfiguriert ist, die Luft zu führen, die von dem stromabwärtigen Rohr (51) durch die Auslassöffnung (51A) zu dem Batteriegehäuse (20) und dem elektrischen Bauteil (13) geführt wird,
**dadurch gekennzeichnet, dass** das stromabwärtige Rohr (52) beinhaltet:
einen ersten stromabwärtigen Rohrabschnitt (60), der sich von dem Eckabschnitt (20C) entlang der ersten vertikalen Wand (20A) erstreckt, wobei der erste stromabwärtige Rohrabschnitt (60) ein stromabwärtiges Ende aufweist, das mit dem elektrischen Bauteil (13) in Kommunikation steht;
einen zweiten stromabwärtigen Rohrabschnitt (70), der sich von dem Eckabschnitt (20C) entlang der zweiten vertikalen Wand (20B) erstreckt, wobei der zweite stromabwärtige Rohrabschnitt (70) ein stromaufwärtiges Ende aufweist, das mit dem Batteriefach (20) in Kommunikation steht; und
einen stromabwärtigen Rohreckabschnitt, der mit dem ersten stromabwärtigen Rohrabschnitt (60) und dem zweiten stromabwärtigen Rohrabschnitt (70) auf einer seitlichen Seite des Eckabschnitts (20C) verbunden ist, und
wobei die Auslassöffnung (51A) über einen des ersten stromabwärtigen Rohrabschnitts (60) und des zweiten stromabwärtigen Rohrabschnitts (70) und über den stromabwärtigen Rohreckabschnitt angeordnet ist.

2. Fahrzeugbatteriepack (10) nach Anspruch 1,
wobei das elektrische Bauteil (13) auf eine Weise angeordnet ist, die in der zweiten Richtung einem Endabschnitt der ersten vertikalen Wand (20A), einem Endabschnitt auf der Seite des Eckabschnitts (20C) entgegengesetzt, zugewandt ist,
wobei ein Vertiefungsabschnitt (30B), der unter eine obere Oberfläche des ersten stromabwärtigen Rohrabschnitts (60) oder des zweiten stromabwärtigen Rohrabschnitts (70) vertieft ist, auf einer oberen Oberfläche des Gehäuses (30) gebildet ist,
wobei der Vertiefungsabschnitt (30B) in einem Bereich angeordnet ist, der dem ersten stromabwärtigen Rohrabschnitt (60) in der zweiten Richtung zugewandt ist, und dem elektrischen Bauteil (13) in der ersten Richtung zugewandt ist, und
wobei das Kühlgebläse (12) und das stromaufwärtige Rohr (51) in dem Vertiefungsabschnitt (30B) angeordnet sind.

3. Fahrzeugbatteriepack (10) nach Anspruch 1 oder 2,
wobei das stromaufwärtige Rohr (51) beinhaltet:
einen oberen Rohrabschnitt (51B), der mit dem Kühlgebläse (12) verbunden ist und der von der oberen Oberfläche des Gehäuses (30) nach oben ragt; und
einen unteren Rohrabschnitt (51C), der mit einer unteren Seite des oberen Rohrabschnitts (51B) verbunden ist, und der innerhalb des Gehäuses (30) angeordnet ist,
wobei die Auslassöffnung (51A) an einem unteren Ende des unteren Rohrabschnitts (51C) gebildet ist,
wobei der untere Rohrabschnitt (51C) mit dem stromabwärtigen Rohr (52) derart verbunden ist, dass das untere Ende des unteren Rohrabschnitts (51C) in das stromabwärtige Rohr (52) eingefügt ist, und
wobei sich die Auslassöffnung (51A) nach unten an dem unteren Ende des unteren Rohrabschnitts (51C) öffnet.

4. Fahrzeugbatteriepack (10) nach einem der Ansprüche 1 bis 3,
wobei die Auslassöffnung (51A) in einer Draufsicht des Gehäuses (30) auf eine Weise angeordnet ist, die eine Grenze zwischen dem stromabwärtigen Rohreckabschnitt und einem des ersten stromabwärtigen Rohrabschnitts (60) und des zweiten stromabwärtigen Rohrabschnitts (70) überlappt.

5. Fahrzeugbatteriepack (10) nach einem der Ansprüche 1 bis 4,
wobei eine Wandoberfläche (51D), die dem Kühlgebläse (12) zugewandt ist, innerhalb des stromaufwärtigen Rohrs (51) bereitgestellt ist,
wobei das elektrische Bauteil (13) an dem stromabwärtigen Ende des ersten stromabwärtigen Rohrabschnitts (60) angeordnet ist, und
wobei ein Wärmeableitungselement, das dazu konfiguriert ist, Wärme, die auf einer unteren Oberfläche des elektrischen Bauteil (13) bereitgestellt ist, abzuleiten.

6. Fahrzeugbatteriepack (10) nach Anspruch 5, der weiter umfasst:
einen Träger (45), der mit dem stromabwärtigen Ende des ersten stromabwärtigen Rohrabschnitts (60) unter dem Wärmeableitungselement verbunden ist,
wobei der erste stromabwärtige Rohrabschnitt (60) einen geneigten Rohrabschnitt (62) beinhaltet, der derart geneigt ist, dass die Luft nach unten gesenkt wird, und
wobei der Träger (45) in einer Form gebildet ist, die eine Seitenoberfläche und eine untere Oberfläche des Wärmeableitungselements einnimmt und dazu konfiguriert ist, die Luft zuzuführen, die von dem ersten stromabwärtigen Rohrabschnitt (60) zu dem Wärmeableitungselement eingeführt wird.

7. Fahrzeugbatteriepack (10) nach einem der Ansprüche 1 bis 6,
wobei der erste stromabwärtige Rohrabschnitt (60) einen gebogenen Abschnitt (63) beinhaltet, der derart gebogen ist, dass er eine Strömungsrichtung der Luft von der ersten Richtung zu der zweiten Richtung ändert, und
wobei der gebogene Abschnitt (63) an das elektrische Bauteil (13) in der ersten Richtung angrenzt.

8. Fahrzeugbatteriepack (10) nach einem der Ansprüche 1 bis 7,
wobei eine erste geneigte Oberfläche (70A), die nach oben zu einer Strömungsrichtung der Luft geneigt ist, auf einer unteren Oberfläche des zweiten stromabwärtigen Rohrabschnitts (70) bereitgestellt ist,
wobei eine zweite geneigte Oberfläche (70B), die dem Batteriegehäuse (20) in der ersten Richtung zugewandt ist, auf einer Seitenoberfläche des zweiten stromabwärtigen Rohrabschnitts (70) bereitgestellt ist, und
wobei das stromabwärtige Ende des zweiten stromabwärtigen Rohrabschnitts (70) dazu konfiguriert ist, die Luft zu einer oberen Oberfläche auf einer Innenseite des Batteriegehäuses (20) einzuführen.

## Revendications

1. Bloc-batterie (10) de véhicule comprenant :
un boîtier de batterie (20) dans lequel est intégré un module de batterie (11) ;
un composant électrique (13) configuré pour convertir l'énergie électrique provenant du module de batterie (11) ;
un conduit (50) à travers lequel s'écoule un air de refroidissement ;
un ventilateur de refroidissement (12) configuré pour faire circuler l'air vers le conduit (50) ; et
un logement (30) qui loge le boîtier de batterie (20), le composant électrique (13) et le conduit (50),
dans lequel le boîtier de batterie (20) comprend :
une première paroi verticale (20A) s'étendant dans une première direction ;
une seconde paroi verticale (20B) s'étendant dans une seconde direction orthogonale à la première paroi verticale (20A) ; et
une partie de coin (20C) où se coupent la première paroi verticale (20A) et la seconde paroi verticale (20B),
dans lequel le composant électrique (13) est disposé sur un côté latéral du boîtier de batterie (20) d'une manière faisant face à la première paroi verticale (20A) dans la seconde direction,
dans lequel le conduit (50) comprend :
un conduit en amont (51) raccordé au ventilateur de refroidissement (12) ; et
un conduit en aval (52) qui communique avec un orifice de décharge (51A) formé sur le conduit en amont (51) et qui est configuré pour guider l'air, qui est guidé du conduit en amont (51) en passant par l'orifice de décharge (51A) jusqu'au boîtier de batterie (20) et au composant électrique (13),
**caractérisé en ce que** le conduit en aval (52) comprend :
une première partie de conduit en aval (60) qui s'étend à partir de la partie de coin (20C) le long de la première paroi verticale (20A), la première partie de conduit en aval (60) ayant une extrémité en aval qui communique avec le composant électrique (13) ;
une seconde partie de conduit en aval (70) qui s'étend à partir de la partie de coin (20C) le long de la seconde paroi verticale (20B), la seconde partie de conduit en aval (70) ayant une extrémité en aval qui communique avec le boîtier de batterie (20) ; et
une partie de coin de conduit en aval raccordée à la première partie de conduit en aval (60) et à la seconde partie de conduit en aval (70) sur un côté latéral de la partie de coin (20C), et
dans lequel l'orifice de décharge (51A) est disposé sur l'une parmi la première partie de conduit en aval (60) et la seconde partie de conduit en aval (70), et sur la partie de coin de conduit en aval.

2. Bloc-batterie (10) de véhicule selon la revendication 1,
dans lequel le composant électrique (13) est disposé en faisant face, dans la seconde direction, à une partie d'extrémité de la première paroi verticale (20A) opposée à une partie d'extrémité du côté de la partie de coin (20C),
dans lequel une partie d'évidement (30B) qui est enfoncée au-dessous d'une surface supérieure de la première partie de conduit en aval (60) ou de la seconde partie de conduit en aval (70), est formée sur une surface supérieure du logement (30),
dans lequel la partie d'évidement (30B) est disposée dans une région faisant face à la première partie de conduit en aval (60) dans la seconde direction et faisant face au composant électrique (13) dans la première direction, et
dans lequel le ventilateur de refroidissement (12) et le conduit en amont (51) sont disposés dans la partie d'évidement (30B) .

3. Bloc-batterie (10) de véhicule selon la revendication 1 ou 2,
dans lequel le conduit en amont (51) comprend :
une partie de conduit supérieure (51B) qui est raccordée au ventilateur de refroidissement (12) et qui fait saillie vers le haut à partir de la surface supérieure du logement (30) ; et
une partie de conduit inférieure (51C) qui est raccordée à un côté inférieur de la partie de conduit supérieure (51B) et qui est disposée à l'intérieur du logement (30),
dans lequel l'orifice de décharge (51A) est formé au niveau d'une extrémité inférieure de la partie de conduit inférieure (51C),
dans lequel la partie de conduit inférieure (51C) est raccordée au conduit en aval (52) de sorte que l'extrémité inférieure de la partie de conduit inférieure (51C) est insérée dans le conduit en aval (52), et
dans lequel l'orifice de décharge (51A) est ouvert vers le bas au niveau de l'extrémité inférieure de la partie de conduit inférieure (51C).

4. Bloc-batterie (10) de véhicule selon l'une quelconque des revendications 1 à 3,
dans lequel, sur une vue en plan du logement (30), l'orifice de décharge (51A) est disposé en chevauchement avec une limite entre la partie de coin de conduit en aval et l'une parmi la première partie de conduit en aval (60) et la seconde partie de conduit en aval (70).

5. Bloc-batterie (10) de véhicule selon l'une quelconque des revendications 1 à 4,
dans lequel une surface de paroi (51D) faisant face au ventilateur de refroidissement (12) est prévue à l'intérieur du conduit en amont (51),
dans lequel le composant électrique (13) est disposé au niveau de l'extrémité en aval de la première partie de conduit en aval (60), et
dans lequel un élément de dissipation de chaleur configuré pour dissiper la chaleur est prévu sur une surface inférieure du composant électrique (13).

6. Bloc-batterie (10) de véhicule selon la revendication 5, comprenant en outre :
un support (45) raccordé à une extrémité en aval de la première partie de conduit en aval (60) au-dessous de l'élément de dissipation de chaleur,
dans lequel la première partie de conduit en aval (60) comprend une partie de conduit inclinée (62) inclinée afin d'abaisser l'air vers le bas, et
dans lequel le support (45) est formé selon une forme qui comprend une surface latérale et une surface inférieure de l'élément de dissipation de chaleur, et est configuré pour fournir l'air introduit par la première partie de conduit en aval (60) à l'élément de dissipation de chaleur.

7. Bloc-batterie (10) de véhicule selon l'une quelconque des revendications 1 à 6,
dans lequel la première partie de conduit en aval (60) comprend une partie pliée (63) qui est pliée afin de modifier une direction d'écoulement de l'air de la première direction à la seconde direction, et
dans lequel la partie pliée (63) est adjacente au composant électrique (13) dans la première direction.

8. Bloc-batterie (10) de véhicule selon l'une quelconque des revendications 1 à 7,
dans lequel une première surface inclinée (70A) inclinée vers le haut vers une direction d'écoulement de l'air est prévue sur une surface inférieure de la seconde partie de conduit en aval (70),
dans lequel une seconde surface inclinée (70B) faisant face au boîtier de batterie (20) dans la première direction est prévue sur une surface latérale de la seconde partie de conduit en aval (70), et
dans lequel l'extrémité en aval de la seconde partie de conduit en aval (70) est configurée pour introduire l'air dans une surface supérieure sur un côté interne du boîtier de batterie (20).
